# EUROPEAN PATENT SPECIFICATION

(11) **EP 0 358 775 B1**
(45) Date of publication and mention of the grant of the patent: **12.10.1994**
(21) Application number: 89902543.1
(22) Date of filing: 18.02.1989
(51) Int. Cl.: G11B 11/10, G11B 5/02

(54) **PHOTOMAGNETIC RECORDING METHOD**
PHOTOMAGNETISCHES AUFZEICHNUNGSVERFAHREN
PROCEDE D'ENREGISTREMENT PHOTOMAGNETIQUE

(30) Priority: 18.02.1988 JP 36269/88
(43) Date of publication of application: 21.03.1990
(73) Proprietor: SONY CORPORATION, Tokyo 141 (JP)
(72) Inventor: INOUE, Hideki, Shinagawa-ku Tokyo 141 (JP)
(74) Representative: Cotter, Ivan John
(86) International application number: PCT/JP89/00164
(87) International publication number: WO 89/07823

(56) References cited:
- WO-A-87/04838
- JP-A-61 198 454
- JP-A-61 265 754
- PATENT ABSTRACTS OF JAPAN vol. 6, no. 156 (P-135)(1034) 17 August 1982,& JP-A-57 74854 (SHARP K.K.) 11 May 1982,

## Description

This invention relates to magneto-optical recording and/or reproducing methods such as those capable of performing high speed access in addition to high density recording.

Magneto-optical disks have been well-known as media which utilise the magneto-optical effect (Kerr effect) to perform recording and/or reproduction. Such magneto-optical recording apparatus may write on a magneto-optical disk, and comprise a magnetic head placed over the upper surface of the disk for generating an alternating magnetic field in response to a recording signal, and an optical means placed under the magnetic head for beaming a laser on to the lower surface of the disk to write data according to the alternating magnetic field on the disk by heating to the Curie point or over, by means of the laser.

Magneto-optical recording is well-known for its high recording density, since the track density and line density are much higher than with magnetic recording. In previously-proposed magneto-optical recording, data are written sequentially on the track.

However, in the previously-proposed magneto-optical recording apparatus, the following problems have arisen.
(1) When data are written sequentially with a narrow space between bits, thermal interference between adjacent bit positions can restrict high density recording.
(2) When large quantities of data are to be sequentially written on to one track, the writing rate is limited by the frequency characteristics of the magnetic head and the performance of the magnetic head drive circuit. The frequency characteristics of the magnetic head are significantly lower than those of the optical means. Accordingly the speed of revolution of the magneto-optical disk has to be decreased. Therefore, the time taken to access data on a certain track is increased so that it is difficult to perform high speed access.

European Patent Application EP-A-0 223 530 discloses a magneto-optical method in which a magneto-optical disk is initialised by reversing the magnetisation direction at fixed intervals. Overwrite recording is performed by exposure to modulated laser light, and the direction of magnetisation is reversed for each successive recording. As a result, each successive recording is in alternate data bit positions, with the previous recording in the intermediate data bit positions being erased.

According to one aspect of the invention there is provided a recording method for writing a recording signal on a magneto-optical medium using an intermittently-driven optical heating means and a magnetic field generating means, the magneto-optical medium having data bit positions separated by a predetermined data bit interval, the method comprising a first step in which the recording signal is recorded in a first group of data bit positions separated by a wider interval than the predetermined data bit interval, and a second step in which the recording signal is recorded in a second group of data bit positions each being between contiguous data bit positions of the first group,
characterised in that the magnetic field generating means is responsive to the recording signal to modulate the generated magnetic field while the heating means heat all the data bit positions of the group respectively being recorded, and in that the second step allows the recording signal to be recorded in the second group of data bit positions while retaining the data previously recorded in the first group of data bit positions during the first step.

According to another aspect of the invention, a corresponding reproducing method can involve the data bit positions of the first group being scanned separately from those of the second group; alternatively both first and second groups can be scanned together, with subsequent discrimination of the data into respective first and second data components.

Preferably, the data bit positions of the second group have the same spacing as that of the data bit positions of the first group, and each data bit of the second group is recorded at least at the predetermined data bit recording interval spaced from a corresponding data bit of the first group.

A recording signal to be recorded on to the first and second data bit position groups may be adjusted to a frequency corresponding to the data bit recording intervals of each group. Also, both the data bit recording intervals of the first and second groups, and the frequency of the recording signal may be determined in accordance with the frequency characteristics of the magnetic field generating means, such as a magnetic head.

The frequency of the recording signal is adjusted by a clock pulse.

Accordingly, a series of data is written first at a certain bit position interval, and the frequency of the recording signal supplied to the magnetic head is divided without decreasing the revolution speed of the magneto-optical recording medium. This leads to improved frequency characteristics of the magnetic head and a saving in the power consumption of the drive circuit. Next, writing is similarly performed on to the unrecorded portions between the above bit positions, and a high density recording on the magneto-optical medium can be achieved overall. Since adjacent bit positions are now sequentially written into, the thermal interference is decreased. Also, since the magneto-optical recording medium can maintain a relatively high revolution speed, the revolution waiting time is decreased, so that access to recorded data can be performed at high speed.

Accordingly, the preferred method is capable of performing high density recording as well as high speed access.

The invention will now be described by way of example with reference to the accompanying drawings, throughout which like parts are referred to by like references, and in which:
Figure 1 is a side schematic view showing a magneto-optical recording apparatus according to an embodiment of the present invention;
Figure 2 is a perspective view showing a structural embodiment of an optical system of the recording apparatus;
Figure 3 is a block diagram showing a control system of the recording apparatus; and
Figure 4 is a timing diagram showing the operation of one embodiment of the invention.

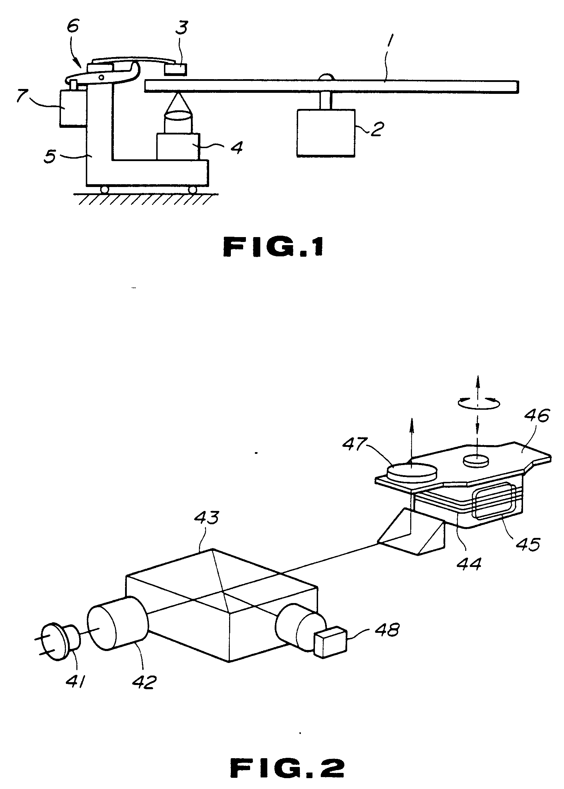

In Figure 1, showing a magneto-optical recording apparatus embodying the present invention, the apparatus includes a magneto-optical disk 1 acting as the magneto-optical recording medium, a spindle motor 2 for rotating the magneto-optical disk, for example, at constant angular velocity (CAV), a magnetic head 3 for generating an alternating magnetic field modulated by a recording signal, an optical system 4 which includes a focus means and a fine tracking means and irradiates a laser beam spot for writing, a carriage 5 which can radially position the magnetic head 3 and the optical system 4 by means of a stepping motor or the like, a head lifter 6 for lifting the magnetic head 3 from the magneto-optical disk 1 when stopped, and a head lifter driving device 7 for generating a drive force for the head lifter 6. The magnetic head 3 is an air bearing floating type head which floats a predetermined space above the disk 1 by means of surface air flow produced by rotation of the disk 1.

The head lifter 6 and the driving device 7 may be servo-controlled to maintain the spacing between the disk 1 and the magnetic head 3 at a constant distance. A large capacity of 20M byte can be accomplished under the control of the fine tracking means with the carriage 5 at a fixed position. Larger capacity can be realised by stepped feeding of the carriage 5.

Figure 2 is a perspective view showing an example of an optical system. The optical system 4 includes at least a laser diode 41 for recording, a collimater lens 42, a deflection beam splitter 43, a two-spindle device consisting of an object lens bobbin 46 which is mounted with a focus coil 44 and a tracking coil 45, an object lens 47 for irradiating the laser beam spot on to an optical disk mounted on the two-spindle device, and a detector 48 for receiving a reflected laser beam from the disk 1 to detect a servo signal or the like. The reproduction part of the optical system, such as a light detector, is not shown. However, the laser beam is focus-controlled and is tracked controllably. The magnetic recording layer on the disk is irradiated to a temperature higher than its Curie point, and is vertically magnetized with a magnetic field strength which would not record magnetically at a normal temperature.

A tracking servo is performed by a pre-group or servo pit previously formed on the magneto-optical disk.

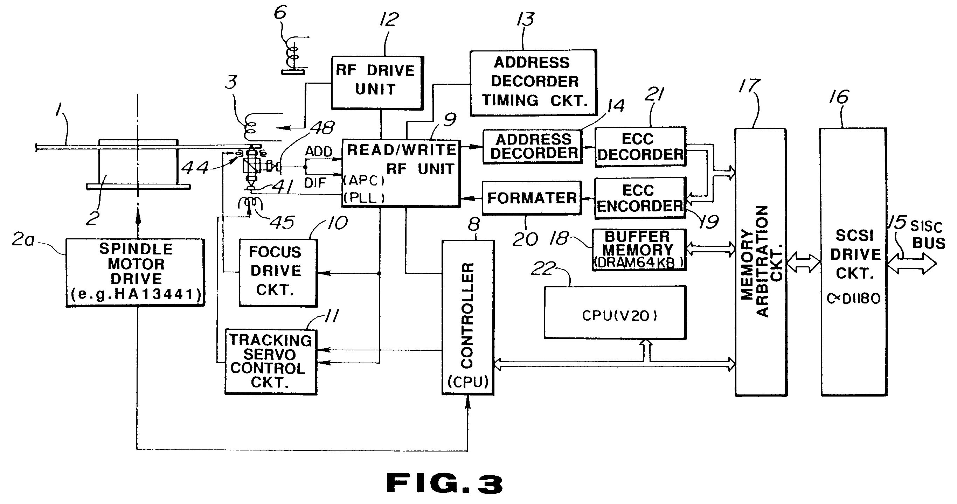

Figure 3 is a block diagram showing an example of the control system of the magneto-optical recording apparatus. A controller 8 consists of a system control central processing unit (CPU) for performing timing indication control and servo control for fine tracking to each block. The disk 1 is rotated at a high speed such as at a constant angular speed (for example, 3000 rpm) by a spindle motor drive 2a which runs the spindle motor 2 under control of the controller 8. A read/write RF unit 9 drives the laser diode 41 using an automatic power control (APC) circuit and the phase locked loop (PLL) of the optical system 4, and detects the read signal for the servo signal and the recording signal with addition and subtraction signals detected by the detector 48. A focus drive circuit 10 and a tracking servo control circuit 11 respectively control the focus coil 44 and the tracking coil 45 of the optical system 4 in accordance with the servo signal to perform focusing and tracking operations, thus holding the laser beam spot in a suitable recordable condition. The laser diode 41 is intermittently driven to control its light emitting timing with the phase locked loop. The timing frequency is within a range which covers the frequency characteristics of the magnetic head 3. A recording signal is provided to the magnetic head 3 by way of an RF drive unit 12, in synchronism with the above frequency. Then, writing is performed at spaced bit positions because of the high speed revolution of the disk 1. An address decoder timing circuit 13 is arranged to separate and detect addresses from the reading signal. The reading signal is read with spaced bit positions and at the same intervals as those for writing, and is then provided by means of an address decoder 14.

The signal to be recorded is supplied to a memory arbitration circuit 17 by way of, for example, an SCSI bus 15 and an SCSI drive circuit 16, and is stored temporarily in a buffer memory 18. Sequentially, a series of data is subjected to parallel-to-serial conversion, and is formatted into a predetermined data format by adding an error correction code (ECC) through a formatter 20. Then the series of data is input to the read/write RF unit 9 as a non-return-to-zero (NRZ) code. When the controller 8 instructs the next writing operation, the next series of data is written in the same way at empty bit positions each between the data bit positions formed by the first writing operation, whereby high density recording can be performed. The disk 1 may be of a concentric circle type or a spiral type. In a spiral type disk, one track return jumping is performed on writing (or reading) of the next series of data. After an ECC decoder 21 has checked and corrected any errors in the read signal, it is supplied to the memory arbitration circuit 17. The corrected signal is stored temporarily in the buffer memory 18, and then it is sequentially transferred to external circuits as parallel data by means of suitable procedures. At this time, a CPU 22 may control the internal/external data. The CPU 22 and the controller 8 may be integrated into a single circuit. The head lifter 6 is driven so as to lift the magnetic head 3 from the disk 1 by the controller 8 when the disk is stopped.

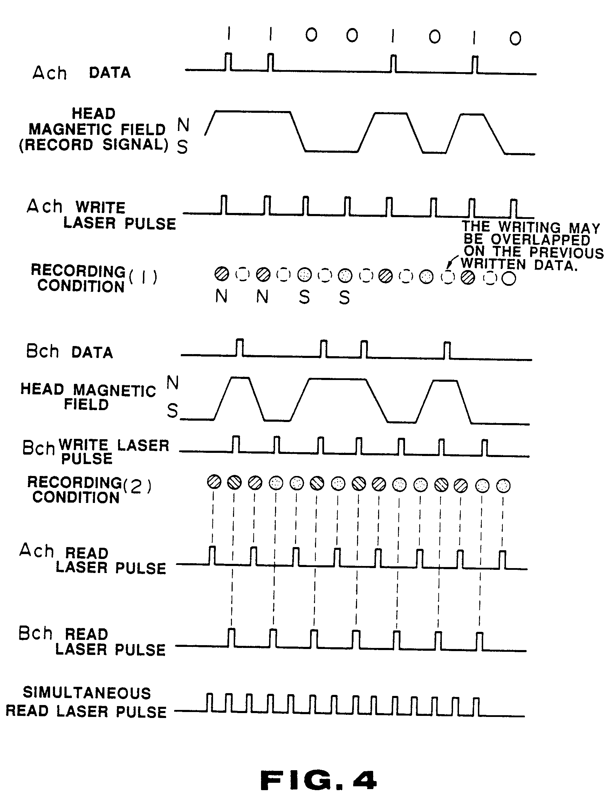

Figure 4 is a timing diagram for explaining one method of operation of the magneto-optical recording apparatus. In the embodiment, the first series of writing data is A channel (Ach) data, and the next series of data is B channel (Bch) data. It will be explained by way of example that the Bch data are written to bit positions between those of the Ach data. The recording signal for the NRZ code is initially produced from the Ach data. The digit "1" or "0" of the data corresponds to the direction of the magnetic field from the magnetic head, and is inverted synchronously by the Ach data writing laser pulse. In the case of a continuous servo, the writing laser pulse is emitted at such a timing that it is written for every bit position (recording condition (1)), and it synchronises in phase to the clock which is stored on the disk 1 as a physical form variation. The writing may be overlapped on previous written data. In such a way, on completion of a series of data writing, magnetic field modulation by the magnetic head is performed on the basis of the Bch data, and then the Bch writing laser pulse is emitted to write the Bch data at such a timing that it is written in the bit positions between the Ach data bit positions (recording condition (2)). Such a spaced writing operation decreases the thermal interference between contiguous bit positions and saves power consumption for magnetic head driving at low frequency.

A method of reading from a disk recorded in the above recording condition (2) will now be explained. As with writing, a laser pulse is irradiated synchronously with the Ach data bit positions in response to the clock variations in order to read the Ach data. A laser pulse is then irradiated at a timing related to the bit positions corresponding to the Bch data between the Ach data bit positions in order to read the Bch data. In order to perform higher speed access, a method may be adopted such that, after a laser pulse has irradiated all the bit positions thereby reading both the Ach and Bch data simultaneously, a control circuit separates or discriminates the Ach and Bch data.

According to the above embodiment, data are recorded every two bit positions in each separate recording operation. However, according to another embodiment of the invention, data may be recorded every three or more bit positions so as to record data over three channels or more. As described above, various applications may be obtained by modifying this concept.

Accordingly, a magneto-optical recording method or apparatus embodying the present invention can, by the spaced writing method, simultaneously overcome the two major problems, one being the frequency characteristics of the magnetic head limiting practical high density recording or high speed accessing, and the other being thermal interference between contiguous bit positions. As a result, a recording apparatus embodying the present invention can improve upon the capacity/volume of previously-proposed magnetic recording, and can realise a performance equal to that of the magnetic recording.

## Claims

1. A recording method for writing a recording signal on a magneto-optical medium (1) using an intermittently-driven optical heating means (4) and a magnetic field generating means (3), the magneto-optical medium (1) having data bit positions separated by a predetermined data bit interval, the method comprising a first step in which the recording signal is recorded in a first group of data bit positions separated by a wider interval than the predetermined data bit interval, and a second step in which the recording signal is recorded in a second group of data bit positions each being contiguous data bit positions of the first group,
characterised in that the magnetic field generating means (3) is responsive to the recording signal to modulate the generated magnetic field while the heating means (4) heat all the data bit positions of the group respectively being recorded, and in that the second step allows the recording signal to be recorded in the second group of data bit positions while retaining the data previously recorded in the first group of data bit positions during the first step.

2. A recording method according to claim 1, wherein the data bit positions of the second group are spaced apart by the same interval as that of the data bit positions of the first group, and each data bit position of the second group is spaced from a corresponding data bit position of the first group by at least the predetermined data bit interval of the magneto-optical medium (1).

3. A recording method according to claim 1 or claim 2, wherein the frequency of the recording signal to be recorded in the first and second groups of data bit positions is adjusted to correspond to the data bit position interval of each group.

4. A recording method according to claim 3, wherein the data bit position intervals and the recording signal frequency of the first and second groups of data bit positions are determined in accordance with the frequency characteristics of the magnetic field generating means (3).

5. A recording method according to claim 3 or claim 4, wherein the recording signal frequency is controlled by a clock pulse.

6. A recording method according to any one of the preceding claims, wherein more than two groups of data bit positions are provided.

7. A reproducing method for reading a magneto-optical medium (1) having data recorded by a method according to any one of claims 1 to 6, wherein the timing of a scanning optical pick-up (4) is controlled so as to scan separately the data bit positions of the first group and the data bit positions of the second group.

8. A reproducing method for reading a magneto-optical medium (1) having data recorded by a method according to any one of claims 1 to 6, wherein an optical pick-up (4) scans both first and second groups of the data bit positions together such that a data bit position of the second group is scanned after a data bit position of the first group and vice versa, and wherein the data read by the optical pick-up (4) is discriminated into first and second data components respectively corresponding to the first and second data bit position groups.

9. Recording/reproducing apparatus for recording on a magneto-optical medium (1) according to any one of claims 1 to 6, and for reproducing from the medium (1) according to claim 7 or claim 8, including an intermittently-driven laser (4) constituting the optical heating means for recording and the optical pick-up (4) for reproduction.

## Patentansprüche

1. Aufzeichnungsverfahren zum Schreiben eines Aufzeichnungssignals auf ein magnetooptisches Medium (1) unter Verwendung einer intermittierend betriebenen Heizeinrichtung (4) und einer Magnetfeld-Erzeugungseinrichtung (3), wobei das magnetooptische Medium (1) durch ein vorbestimmtes Datenbit-Intervall getrennte Datenbit-Positionen aufweist und das Verfahren einen ersten Schritt, bei welchem das Aufzeichnungssignal in einer ersten Gruppe aus durch ein im Vergleich zum vorbestimmten Datenbit-Intervall breiteres Intervall getrennten Datenbit-Positionen aufgezeichnet wird, sowie einen zweiten Schritt, bei welchem das Aufzeichnungssignal in einer zweiten Gruppe aus den Datenbit-Positionen der ersten Gruppe jeweils benachbarten Datenbit-Positionen aufgezeichnet wird, aufweist,
**dadurch gekennzeichnet**, daß die Magnetfeld-Erzeugungseinrichtung (3) auf das Aufzeichnungssignal anspricht, um das erzeugte Magnetfeld zu modulieren, während die Heizeinrichtung (4) alle Datenbit-Positionen der jeweils aufgezeichneten Gruppe erwärmt, und daß durch den zweiten Schritt das Aufzeichnungssignal in der zweiten Gruppe aus Datenbit-Positionen unter Bewahrung der vorher während des ersten Schritts in der ersten Gruppe aus Datenbit-Positionen aufgezeichneten Daten aufgezeichnet werden kann.

2. Aufzeichnungsverfahren nach Anspruch 1, wobei die Datenbit-Positionen der zweiten Gruppe durch das gleiche Intervall wie die Datenbit-Positionen der ersten Gruppe voneinander getrennt sind und jede Datenbit-Position der zweiten Gruppe wenigstens durch das vorbestimmte Datenbit-Intervall des magnetooptischen Mediums (1) von einer korrespondierenden Datenbit-Position der ersten Gruppe getrennt ist.

3. Aufzeichnungsverfahren nach Anspruch 1 oder 2, wobei eine Frequenz des in der ersten und zweiten Gruppe aus Datenbit-Positionen aufzuzeichnenden Aufzeichnungssignals so eingestellt ist, daß sie mit dem Datenbit-Positionsintervall jeder Gruppe korrespondiert.

4. Aufzeichnungsverfahren nach Anspruch 3, wobei die Datenbit-Positionsintervalle und die Aufzeichnungssignalfrequenz der ersten und zweiten Gruppe aus Datenbit-Positionen entsprechend einer Frequenzcharakteristik der Magnetfeld-Erzeugungseinrichtung (3) bestimmt sind.

5. Aufzeichnungsverfahren nach Anspruch 3 oder 4, wobei die Aufzeichnungssignalfrequenz durch einen Taktimpuls gesteuert ist.

6. Aufzeichnungsverfahren nach einem der vorhergehenden Ansprüche, wobei mehr als zwei Gruppen aus Datenbit-Positionen vorgesehen sind.

7. Wiedergabeverfahren zum Lesen eines magnetooptischen Mediums (1) mit durch ein Verfahren nach einem der Ansprüche 1 bis 6 aufgezeichneten Daten, wobei eine Zeitsteuerung eines abtastenden optischen Aufnehmers (4) so gesteuert ist, daß die Datenbit-Positionen der ersten Gruppe und die Datenbit-Positionen der zweiten Gruppe separat abgetastet werden.

8. Wiedergabeverfahren zum Lesen eines magnetooptischen Mediums (1) mit durch ein Verfahren nach einem der Ansprüche 1 bis 6 aufgezeichneten Daten, wobei ein optischer Aufnehmer (4) die erste und zweite Gruppe aus Datenbit-Positionen derart gemeinsam abtastet, daß eine Datenbit-Position der zweiten Gruppe nach einer Datenbit-Position der ersten Gruppe und/oder umgekehrt abgetastet wird, und wobei die durch den optischen Aufnehmer (4) gelesenen Daten als eine mit der ersten und zweiten Gruppe aus Datenbit-Positionen korrespondierende erste bzw. zweite Datenkomponente unterschieden werden.

9. Aufzeichnungs- und/oder Wiedergabevorrichtung zur Aufzeichnung auf einem magnetooptischen Medium (1)nach einem der Ansprüche 1 bis 6 und/oder zur Wiedergabe vom Medium (1) nach Anspruch 7 oder 8, mit einem intermittierend betriebenen Laser (4), der die optische Heizeinrichtung zur Aufzeichnung und den optischen Aufnehmer (4) zur Wiedergabe bildet.

## Revendications

1. Procédé d'enregistrement pour écrire un signal d'enregistrement sur un support magnéto-optique (1) en utilisant un moyen de chauffage optique (4) commandé de façon intermittente et un moyen générateur de champ magnétique (3), le support magnéto-optique (1) comportant des positions de bit de donnée séparées par un intervalle de bit de donnée prédéterminé, le procédé comprenant une première étape dans laquelle le signal d'enregistrement est enregistré dans un premier groupe de positions de bit de donnée séparées par un intervalle plus large que l'intervalle de bit de donnée prédéterminé, et une seconde étape dans laquelle le signal d'enregistrement est enregistré dans un second groupe de positions de bit de donnée, chacun étant placé entre les positions de bit de donnée contiguës du premier groupe ;
caractérisé en ce que le moyen générateur de champ magnétique (3) est sensible au signal d'enregistrement pour moduler le champ magnétique produit tandis que le moyen de chauffage (4) chauffe toutes les positions de bit de donnée du groupe qui est, respectivement, en cours d'enregistrement ; et en ce que la seconde étape permet au signal d'enregistrement d'être enregistré dans le second groupe de positions de bit de donnée tout en conservant les données enregistrées préalablement, pendant la première étape, dans le premier groupe de positions de bit de donnée.

2. Procédé d'enregistrement selon la revendication 1, dans lequel les positions de bit de donnée du second groupe sont espacées du même intervalle que les positions de bit de donnée du premier groupe, et chaque position de bit de donnée du second groupe est séparée, d'une position de bit de donnée correspondante du premier groupe, par au moins l'intervalle de bit de donnée prédéterminé du support magnéto-optique (1).

3. Procédé d'enregistrement selon la revendication 1 ou la revendication 2, dans lequel la fréquence du signal d'enregistrement qui doit être enregistré dans les premier et second groupes de positions de bit de donnée est réglé de manière à correspondre à l'intervalle de position de bit de donnée de chaque groupe.

4. Procédé d'enregistrement selon la revendication 3, dans lequel les intervalles de positions de bit de donnée et la fréquence du signal d'enregistrement des premier et second groupes de positions de bit de donnée sont déterminés en fonction de la réponse en fréquence du moyen générateur de champ magnétique (3).

5. Procédé d'enregistrement selon la revendication 3 ou la revendication 4, dans lequel la fréquence de signal d'enregistrement est commandée par une impulsion d'horloge.

6. Procédé d'enregistrement selon l'une quelconque des revendications précédentes, dans lequel plus de deux groupes de positions de bit de donnée sont prévus.

7. Procédé de reproduction pour lire un support magnéto-optique (1) portant des données enregistrées par un procédé selon l'une quelconque des revendications 1 à 6, dans lequel la cadence d'une tête optique de balayage (4) est commandée de manière à balayer séparément les positions de bit de donnée du premier groupe et les positions de bit de donnée du second groupe.

8. Procédé de reproduction pour lire un support magnéto-optique (1) portant des données enregistrées par un procédé selon l'une quelconque des revendications 1 à 6, dans lequel une tête optique (4) balaye à la fois les premier et second groupes de positions de bit de donnée en même temps, de sorte qu'une position de bit de donnée du second groupe est balayée après une position de bit de donnée du premier groupe et vice versa, et dans lequel les données lues par la tête optique (4) sont séparées en, respectivement, des première et seconde composantes de données correspondant aux premier et second groupes de positions de bit de donnée.

9. Dispositif d'enregistrement/reproduction pour enregistrer sur un support magnéto-optique (1) selon l'une quelconque des revendications 1 à 6, et pour reproduire à partir du support (1) selon la revendication 7 ou la revendication 8, incluant un laser commandé de manière intermittente (4), constituant le moyen de chauffage optique pour l'enregistrement et la tête optique (4) pour la reproduction.
